# EUROPEAN PATENT APPLICATION

(11) **EP 0 549 282 A2**
(43) Date of publication of application: **30.06.1993**
(21) Application number: 92311598.4
(22) Date of filing: 18.12.1992
(51) Int. Cl.: G11B 7/085, G11B 7/09

(54) **Optical disk drive**

(30) Priority: 25.12.1991 JP 343335/91
(71) Applicant: International Business Machines Corporation, Armonk, N.Y. 10504 (US)
(72) Inventor: Kagami, Naoyuki, Fujisawa-shi, Kanagawa-ken (JP); Kubo, Hiroaki, Oomihachiman-shi, Shiga-ken (JP)
(74) Representative: Burt, Roger James, Dr.

(57) **Abstract**

An optical disk drive includes a coarse tracking actuator 4 for driving an optical head 1, a fine tracking actuator 3 for driving an objective lens 24 on said optical head, and tracking error detecting means 7 for generating a tracking error signal indicating a positional difference between an optical spot irradiated on an optical disk 5 and a target track. The optical disk drive further includes means 200 for indicating whether the number of tracks from a current track to the target track is less than a predetermined number of tracks and drives the fine actuator 3 in the tracking direction under the velocity control based on a tracking error signal only if the number of tracks from the current track to the target track is less than the predetermined number of tracks.

## Description

The present invention relates to an optical disk drive, and more particularly to a method and an apparatus for achieving seek operations of high reliability at high velocity.

In an optical disk drive, a seek operation for moving an optical head (and therefore a laser beam) from a current position (or a current track) to a target position (or a target track) across tracks is performed by combining a coarse seek operation in which the optical head is moved, by using a linear position sensor, to the neighborhood of the target track at a high velocity and a fine seek operation in which the optical head is moved to the target track across remaining tracks one at a time at a velocity of one track per milliseconds. However, this method needs more time for the fine seek operation, and therefore it becomes difficult to decrease a total of seek time. For this reason, methods of performing a seek operation using only a tracking error signal without using the linear position sensor have been adopted. The chief methods of performing a seek operation using only the tracking error signal (also called the TES) are as follows:

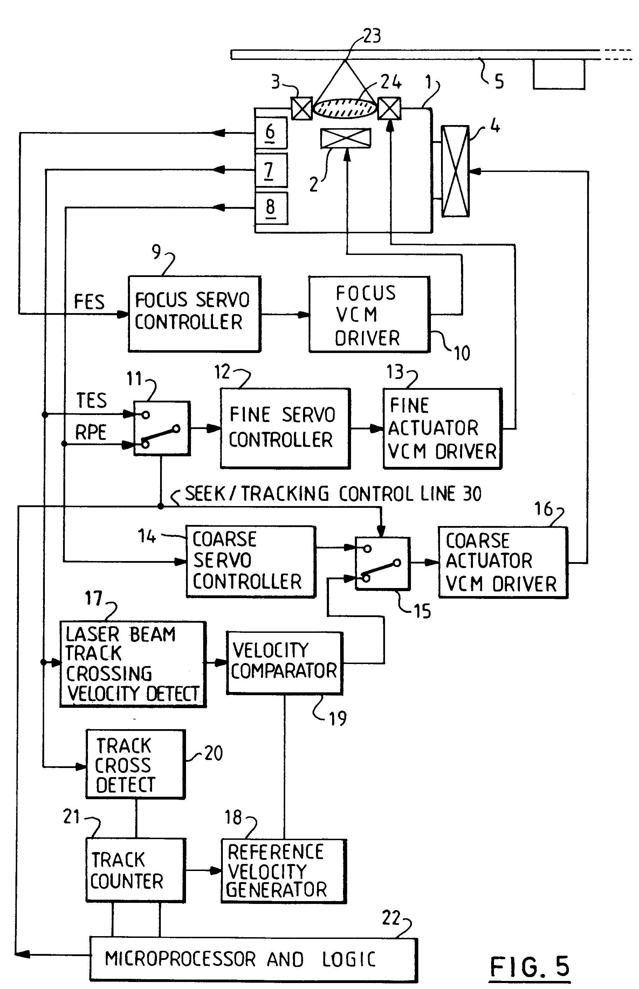

FIG.5 shows a block diagram of an optical disk drive using a first conventional method. In FIG.5, the focus control of a beam spot 23 applied to the surface of an optical disk 5 can be performed as follows: a FES (Focusing Error Signal) sensor 6 detects a focus error, and thereby generates a focus error signal (also called FES). Based on the focus error signal, a focus servo controller 9, a focus VCM driver 10, and a focus actuator 2 perform the position control of an objective lens 24 in the focussing direction and control the focus so that a focal point of the objective lens 24 is on the surface of the optical disk.

On the other hand, with respect to the position control of the beam spot 23 in the tracking direction (that is, in the radial direction) of the optical disk, the track following operation and the seek operation are performed separately. First, in the track following operation, a switcher 11 is switched, by a seek/track following control line 30 carrying output from a microprocessor and logic 22 to the side of an output of a TES sensor which detects the position of the beam spot 23 relative to a track groove on the optical disk 5 and generates a TES (Tracking Error Signal). In response to the TES, a fine servo controller 12, a fine actuator VCM driver 13, and a fine actuator 3 drive the objective lens 24 in the tracking direction so that the relative position of the beam spot 23 to the track groove on the optical disk 5 becomes zero. The beam spot 23 is thus positioned to the current track. Then the position of the objective lens 24 relative to an optical head 1 is detected by a lens position sensor 8 to generate a relative position error signal and a coarse servo controller 14, a coarse actuator VCM driver 16, and a coarse actuator 4 perform the position control of the optical head 1 in the tracking direction so that the relative position error signal (also called lens position error signal) becomes zero. In this case, a switcher 15 is switched, by the seek/track following control line 30, to the side of an output of the coarse servo controller 14. Thus, the beam spot 23 is positioned to the current track and the position of the optical head 1 is controlled so that the relative position error (abbreviated RPE) signal becomes zero in such a manner that the head follows the objective lens 24.

On the other hand, in the seek operation which moves the beam spot 23 from the current track to a target track, the microprocessor and logic 22 presets the number of tracks corresponding to strokes from the current track to the target track into a track counter 21. The seek/track following control line 30 is set to the seek state, the switcher 11 is switched to the side of RPE, and the switcher 15 is switched to the side of an output of a velocity comparator 19. Since the switcher 11 is switched to RPE, the objective lens 24 is controlled by the fine servo controller 12, the fine actuator VCM driver 13, and the fine actuator 3 so that the position error of the objective lens 24 relative to the optical head 1 becomes zero. A track cross signal generated when the beam spot 23 crosses a track groove on the optical disk 5 is detected by a track cross detecting circuit 20. Based on the track cross signal detected by the track cross detecting circuit 20, the number of said tracks preset to the track counter 21 counts down. The contents of the track counter 21 are outputted to a reference velocity generating circuit 18 and a reference velocity according to the number of remaining tracks is outputted to the velocity comparator 19. A TES is converted, by a laser beam track crossing velocity detecting circuit 17, to a velocity of movement of the beam spot 23. The velocity of movement outputted from the laser beam track crossing velocity detecting circuit 17 is compared, by the velocity comparator 19, with said reference velocity and a velocity error signal is outputted. Since the switcher 15 is switched to the side of an output of the velocity comparator 19, the coarse actuator 4 is drived based on the velocity error signal, by the coarse actuator VCM driver and the velocity is controlled so that the velocity of the beam spot 23 follows a reference velocity corresponding to the reference velocity signal.

Thus, when the beam spot 23 reaches the target track, the microprocessor and logic 22 switches the seek/track following control line 30 to the track following state where the beam spot is under position control.

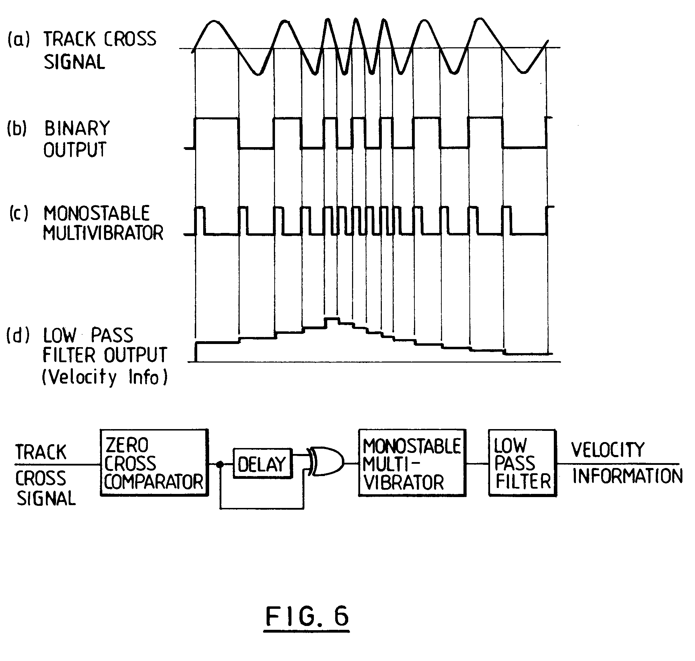

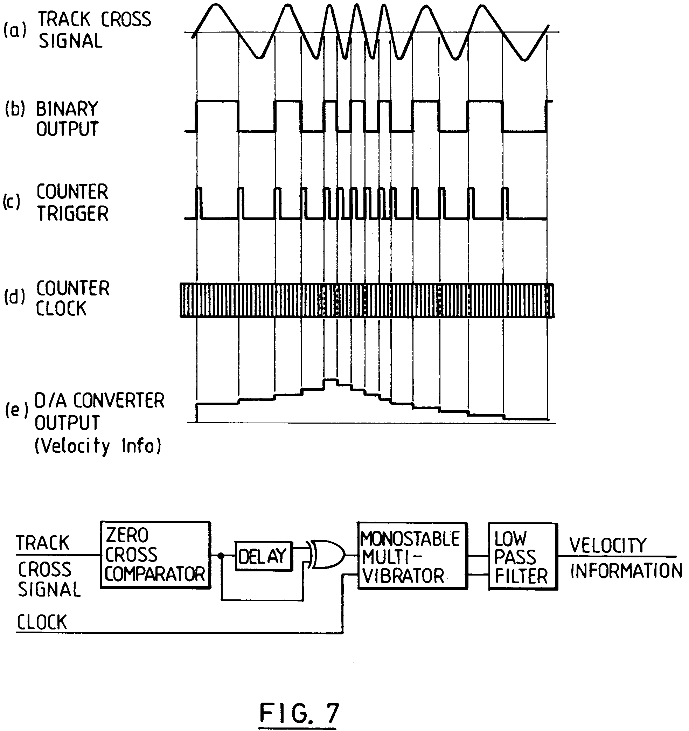

An example of said laser beam track crossing velocity detecting circuit is shown by FIG.6 and FIG.7. The velocity detecting circuit is a kind of frequency/voltage converter. As shown in FIG.6, the zero crossing of a TES is converted to binary (b), then binary output is converted, by a monostable multivibrator, to a pulse of constant time interval (c) and low-pass filtering is applied to the pulse to obtain velocity information (d). Another method counts the pulse durations of binary output (b), as shown in FIG.7, by using a counter (d) and thus obtains velocity information (e).

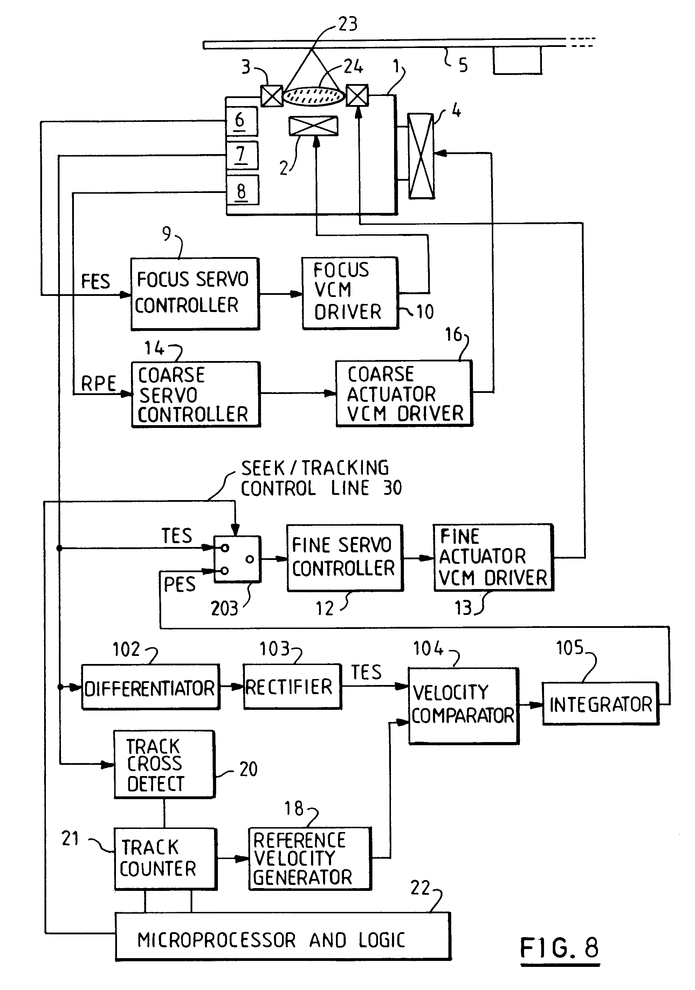

FIG.8 is a block diagram showing an optical disk drive using the second conventional method for track seeking/following. The focus control of the beam spot 23 irradiated onto the surface of the optical disk 5 is performed by the FES sensor 6, the focus servo controller 9, the focus VCM driver 10, and the focus actuator 2 in the same way as the first method described above.

Also the track following operation of the beam spot 23 and the position control of the optical head 1 are performed in the same way as the first method, that is, a switcher 203 is switched to the side of TES and the track following of the beam spot is controlled, based on a TES, by the TES sensor 7, the fine servo controller 12, the fine actuator VCM driver 13, and the fine actuator 3. The position control of the optical head 1 is performed, based on a RPE signal, by the lens position sensor 8, the coarse servo controller 14, the coarse actuator VCM driver 16, and the coarse actuator 4.

However, in the seek operation which moves the beam spot 23 from a current track to a target track, the microprocessor and logic 22 presets the number of tracks corresponding to strokes from the current track to the target track into a track counter 21. The seek/track following control line 30 is set to the seek state, and the switcher 203 is switched to the side of an integrator 105. A track cross signal generated when the beam spot 23 crosses a track groove on the optical disk 5 is detected by the track cross signal detecting circuit 20. Based on the track cross signal detected by the track cross detecting circuit 20, the said number of tracks preset in the track counter 21 is decreased. The contents of the track counter 21 are outputted to the reference velocity generating circuit 18 and a reference velocity according to the number of remaining tracks is outputted to a velocity comparator 104.

A TES is converted, by a differentiator 102 and a rectifier 103, to a differential tracking position, that is, a velocity of movement of the beam spot 23 and compared, by a velocity comparator 104, with said reference velocity. The difference between them is integrated by the integrator 105 and outputted as a position error signal. The fine actuator 3 is driven, based on the position error signal (also called PES), by the fine servo controller 12 and the fine actuator VCM driver 13 and velocity control is performed so that the velocity of the beam spot 23 follows a reference velocity corresponding to the reference velocity signal. The optical head 1 moves in such a way that it follows the positions of the objective lens 24 so that the lens position error becomes zero, as described above.

Thus, when the beam spot 23 reaches the target track, the microprocessor and logic 22 switches the seek/track following control line 30 to the track following state where the beam spot is under position control.

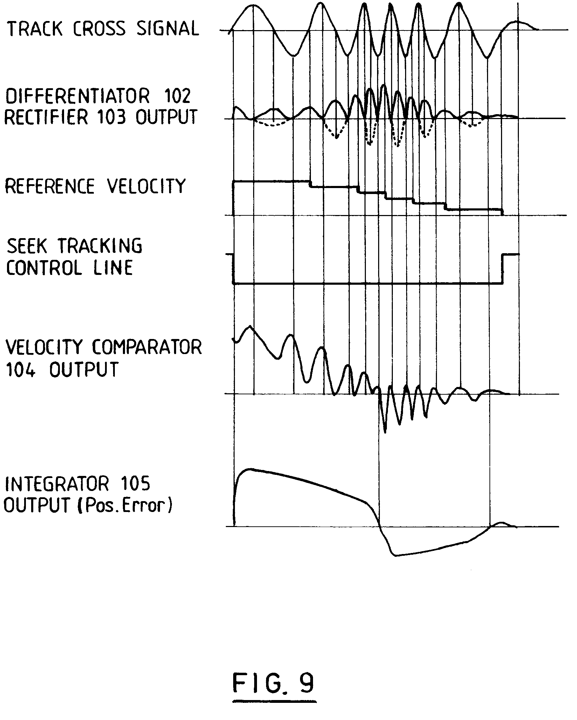

In the following, the operations of circuits from the differentiator 102 to the integrator 105 are described by reference to FIG.9. A TES is converted, by the differentiator 102 and the rectifier 103, to a differential tracking position, that is, the velocity of movement of the beam spot 23, compared with a reference velocity corresponding to the number of remaining tracks by the velocity comparator 104, and outputted as a position error signal (PES) by the integrator 105. Since the velocity of the beam spot 23 is low immediately after the seek operation is started, a position error signal the amplitude of which is large is inputted to the fine servo controller 12 and thereby the fine actuator is accelerated. If a significantly low reference velocity is given in the neighborhood of the target track so that the velocity of the beam spot reaches a controllable velocity at which some degree of track following is possible, the velocity control is performed even slightly before the target track center is reached, and therefore positioning to the target track can be exactly controlled.

The first method of the prior art has been generally considered for use in magnetic disk drives. However, it is not possible to set a high control frequency for the coarse actuator 4 in an optical disk drive, the head of which is larger and heavier than that of a magnetic disk drive, and therefore the velocity of the coarse actuator 4 cannot be precisely controlled in the neighborhood of a target track. Thus an attempt to shift to the track following control fails.

Frequencies of a TES range from 1KHz to hundreds of kilohertz (kHz) in the seek operation, and therefore it is necessary to widen the range of the operating frequency of the laser beam track crossing velocity detecting circuit in order to realize high-speed track access, and in some cases it is necessary to switch plural bandwidth controlling circuits to one another, which makes the circuits complex. Further, the method for detecting a velocity described in the first method first detects the velocity after a track is crossed, and therefore the velocity control becomes delayed immediately before a target track.

However, the second method can obtain much the same control as the tracking control in the neighborhood of the target track, since the fine actuator 3 is always used for primary control based on a signal (PES) corresponding to the position error. Therefore, fine velocity control and position control become possible and a reliable shift to track following control is realizable. However, in the second method, the fine actuator 3 is always in primary control and the seek operation is secondarily controlled in such a way that the coarse actuator 4 controlled by a RPE signal is under the following operation. Therefore the acceleration and deceleration of the coarse actuator 4 are delayed and it becomes difficult to make the most of the ability of acceleration or deceleration in the coarse actuator 4. Further, in the second method, as in the first method, the frequencies of the TES range from 1KHz to hundreds of kilohertz (kHz) during the seek operation, and therefore it is necessary to widen the range of the operating frequency of the differentiator 102 and the rectifier 103 in order to realize high-speed track access, and in some cases it is necessary to switch plural bandwidths controlling circuits to one another, which again makes the circuits complex.

Accordingly, the invention provides an optical disk drive including a coarse tracking actuator for driving an optical head, a fine tracking actuator for driving an objective lens on said optical head, tracking error detecting means for generating a tracking error signal indicating a positional difference between an optical spot irradiated on an optical disk and a target track, switching means adapted to sense whether the number of tracks from the current track to the target track is less than a predetermined value, and if so to switch the fine tracking actuator to being driven in the tracking direction under velocity control based on said tracking error signal.

Such a system overcomes the above problems of the prior art to make the most of the acceleration and deceleration ability of an actuator in a simple system configuration, thereby realizing a fast seek operation of high reliability. Thus a switching means allows different forms of seek control, and only if the number of tracks from the current track to the target track is less than a predetermined value is the fine tracking actuators switched to being driven in the tracking direction under velocity control based on the tracking error signal. Said predetermined value may, if desired, depend on the absolute location of the track at the start of the seek operation, and the target track. Preferably, the velocity of said fine tracking actuator is controlled based on a value obtained from integration of the difference between the current velocity derived from said tracking error signal and a reference velocity.

In a preferred embodiment, the switching means includes a track counter for counting the number of tracks from the current track to the target track and means for indicating whether the number of tracks from the current track to the target track is less than a predetermined number of tracks. The output from the indicating means can then be used to switch the operation of the fine tracking actuator.

It is further preferred that if the number of tracks from the current track to the target track is not less than the predetermined number of tracks, said coarse tracking actuator is driven in the tracking direction based on the number of tracks in said track counter.

Preferably the optical disk drive further includes lens position detecting means for generating a relative position error signal indicating the position of said objective lens relative to said optical head, and wherein if the number of tracks from the current track to the target track is not less than the predetermined number of tracks, said fine tracking actuator is also driven in the tracking direction, based on said relative position error signal. On the other hand if the number of tracks from the current track to the target track is less than the predetermined number of tracks, said coarse tracking actuator is also driven in the tracking direction, based on said relative position error signal. Thus in either case both the fine tracking actuator and the coarse tracking actuator are employed, but their respective control regimes are switched by the switching means as the target track is approached to within the predetermined number of tracks.

It is also preferred that the optical disk drive further includes estimation means for estimating a position, a velocity, and external forces for said coarse tracking actuator and means for correcting the velocity and external forces of said coarse tracking actuator estimated by said estimation means, based on the difference between the actual position of said coarse tracking actuator, obtained from the number of tracks in said track counter, and an estimated position of said coarse tracking actuator, obtained from said estimation means, wherein said coarse tracking actuator is driven in the tracking direction, based on an estimated velocity and an estimated external force after correction.

Although the embodiment described above uses a track counter to count down the number of tracks from the current track to the target track in order to determine whether the remaining number of tracks is less than a predetermined value, other techniques that effectively measure the approach to the target track can also be adopted. For example, in a second preferred embodiment the switching means includes means for outputting a switching signal to the fine tracking actuator when a frequency of said tracking error signal becomes smaller than a predetermined value during deceleration of said optical head. In a third preferred embodiment, the switching means includes means for outputting a switching signal to the fine tracking actuator when a velocity of said optical head becomes smaller than a predetermined value during deceleration of said optical head. Whilst neither of these approaches directly measures the number of tracks from the current track to the target track, they perform exactly the same function in that they permit an assessment of the distance to the target track based on a typical seek operation. Thus for example, as the target track is approached, the velocity of the head slows down, so that the third embodiment users the velocity as an indicator of distance to the target track. Thus the predetermined switching values of decelerration or velocity in the second and third embodiments respectively translate are equivalent to the predetermined number tracks of the first embodiment.

The invention also provides a method for seeking a track on an optical disk in an optical disk drive including a coarse tracking actuator for driving an optical head, a fine tracking actuator for driving an objective lens on said optical head, tracking error detecting means for generating a tracking error signal indicating a positional difference between an optical spot irradiated on the optical disk and the target track, said method comprising the steps of
counting the number of tracks from the current track to the target track;
determining if the number of tracks from the current track to the target track is less than a predetermined number of tracks, and if so, switching the fine tracking actuator to being driven in the tracking direction under velocity control based on said tracking error signal.

An embodiment of the present invention will now be described by way of example with reference to the following drawings:
FIG.1 is a diagram of an optical disk drive in accordance with the present invention;
FIG.2 shows the waveforms of various signals in the seek operation of the optical disk drive of FIG.1;
FIG.3 is a flowchart showing steps in the calculation of the drive current of the coarse actuator by means of the microprocessor and logic of the optical disk drive of Figure 1;
FIG.4 is a diagram showing a possible configuration for calculating the drive current of the coarse actuator by means of the microprocessor and logic of the optical disk drive of Figure 1;
FIG.5 is a diagram illustrating a first conventional method for a seek operation;
FIG.6 shows an example of the configuration of the laser beam track crossing velocity detecting circuit in FIG.5;
FIG.7 shows another example of the configuration of the laser beam track crossing velocity detecting circuit in FIG.5;
FIG.8 is a diagram illustrating a second conventional method for a seek operation; and
FIG.9 is a diagram showing the operations of the section from the differentiator to the integrator of Figure 8.

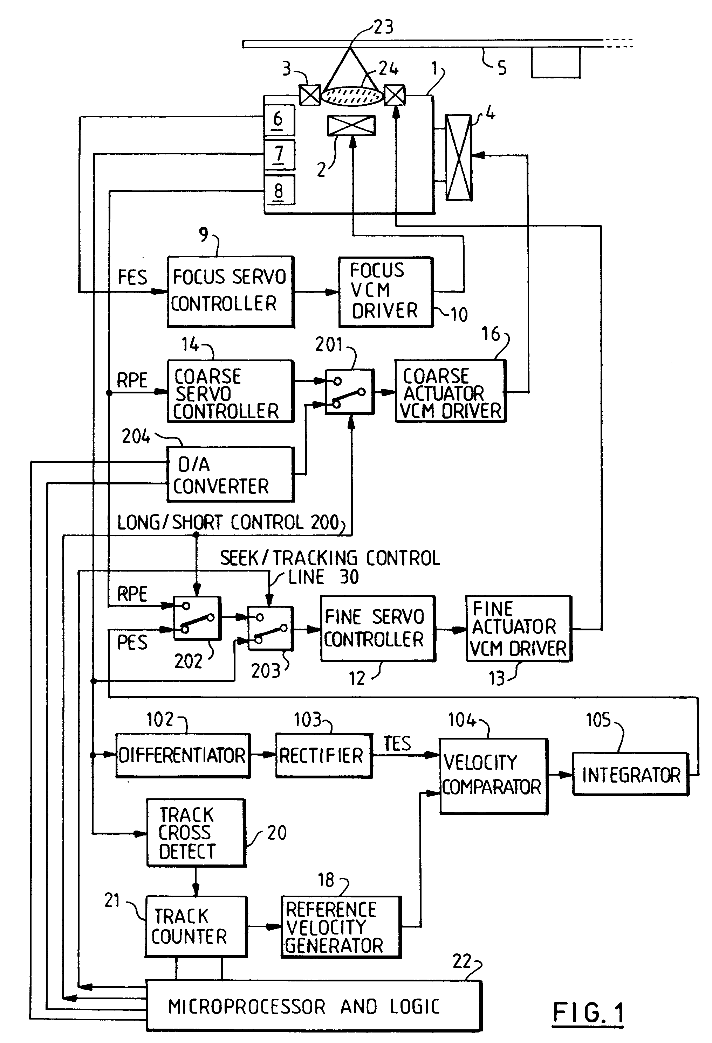

FIG.1 shows an embodiment of an optical disk drive according to the present invention. The focus control of the beam spot 23 irradiated on the surface of the optical disk 5 is as follows: the FES sensor 6 detects a focus error to generate a focus error signal. Based on the focus error signal, the focus servo controller 9, the focus VCM driver 10, and the focus actuator 2 perform the position control of the objective lens 24 in the focusing direction, and thereby the focus is controlled so that the object lens 24 is focused on the surface of the optical disk.

With respect to the position control of the beam spot 23 in the radial direction of the optical disk, the track following operation and the seek operation will be described separately. First, in the track following operation, a switcher 203 is switched, by the seek/track following control line 30 carrying output from the microprocessor and logic 22, to the side of output (TES) of the TES sensor for detecting the relative position of the beam spot 23 to a track groove on the optical disk 5 to generate a TES. Based on the TES, the fine servo controller 12, the fine actuator VCM driver 13, and the fine actuator 3 drive the objective lens 24 in the tracking direction so that the relative displacement of the beam spot 23 from a track groove on the optical disk 5 becomes zero. The beam spot 23 is thus positioned on the current track.

In the track following operation, a switcher 201 is switched, by the long/short seek control line 200 (described later), to the side of output of the coarse servo controller 14. Therefore, the position of the objective lens 24 relative to the optical head 1 is detected by the lens position sensor 8 to generate a RPE signal. The coarse servo controller 14, the coarse actuator VCM driver 16, and the coarse actuator 4 thereby control the position of the optical head 1 in the tracking direction so that the RPE signal becomes zero.

Thus, the beam spot 23 is positioned on the current track and the position of the optical head 1 is controlled in such a manner that it follows the position of the objective lens 24 so that the lens position error becomes zero.

On the other hand, in the seek operation for moving the beam spot 23 from the current track to a target track, the microprocessor and logic 22 presets the number of tracks corresponding to strokes from the current track to the target track into the track counter 21. During the seek operation, a track cross signal generated when the beam spot 23 crosses a track groove on the optical disk 5 is detected by the track cross detecting circuit 20. Based on the track cross signal detected by the track cross detecting circuit 20, the number of tracks preset in the track counter 21 counts down. Therefore, the track counter 21 always retains the number of tracks remaining to be encountered until the target track is reached.

The microprocessor and logic 22 can read the contents of the track counter 21. In a seek operation for more than a predetermined number of tracks, the microprocessor and logic 22 sets the long/short seek control line 200 to the long seek state. The predetermined number of tracks is determined based on a consideration of the operating frequencies, the frequency of the TES, etc., and the various electric circuits used in the optical disk drive apparatus. The embodiment of Figure 1 typically sets predetermined number of tracks at somewhere between 50 to 100 tracks, although the present invention is not limited to such a range.

The long/short seek control line 200 is connected to the switcher 202. In the long seek state, the switcher 202 is switched to the side of RPE. Based on the RPE signal, the object lens 24 is controlled by the fine servo controller 12, the fine actuator VCM driver 13, and the fine tracking actuator 3 in order that the position error of the objective lens 24 relative to the optical head 1 becomes zero. The long/short seek control line 200 is connected also to the switcher 201. In the long seek state, the switcher 201 is switched to the side of the output of a digital-to-analog converter (D/A converter) connected to the microprocessor. The microprocessor and logic 22 calculates a drive current for the coarse actuator 4 based on the contents of the track counter 21, according to a calculation method described later and outputs the result to the digital-to-analog converter 204. Based on output from the digital-to-analog converter 204, the coarse actuator VCM driver 16 and the coarse actuator 4 control the movement of the optical head 1.

The microprocessor and logic 22 always checks the contents of the track counter 21. The microprocessor and logic 22 sets the long/short seek control line 200 to the short seek state when it detected that the number of remaining tracks is smaller than the predetermined number of tracks. In the short seek state, the switchers 201 and 202 are switched to the side of the coarse servo controller 14 and the side of the integrator 105, respectively. In this state track following operations are performed in the same manner as the second conventional method described above. In other words, the contents of the track counter 21 are outputted to the reference velocity generating circuit 18 and a reference velocity dependent on the number of remaining tracks is outputted to the velocity comparator 104. The TES is converted, through the differentiator 102 and the rectifier 103, to a differential tracking position, that is, the velocity of movement of the beam spot 23 and then compared with the above reference velocity by the velocity comparator 104. The difference between them is integrated by the integrator 105 and outputted as a position error signal (PES). Based on the PES, the fine servo controller 12 and the fine actuator VCM driver 13 drive the fine actuator 3, and thereby control the velocity so that the velocity of the beam spot 23 follows the reference velocity corresponding to the reference velocity signal. The optical head 1 moves in such a manner that it follows the position of the objective lens 24 so that the lens position error becomes zero as described above.

When the beam spot 23 thus reaches the target track, the microprocessor and logic 22 sets the seek/track following control line 200 to the track following state, and thereby the beam spot 23 becomes placed under the track following position control as described above.

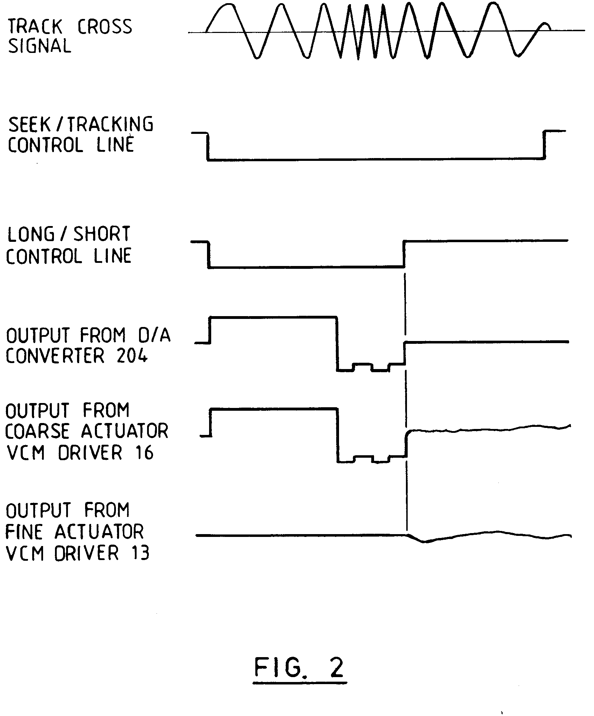

The behavior of the signals during the seek operation is shown by FIG.2.

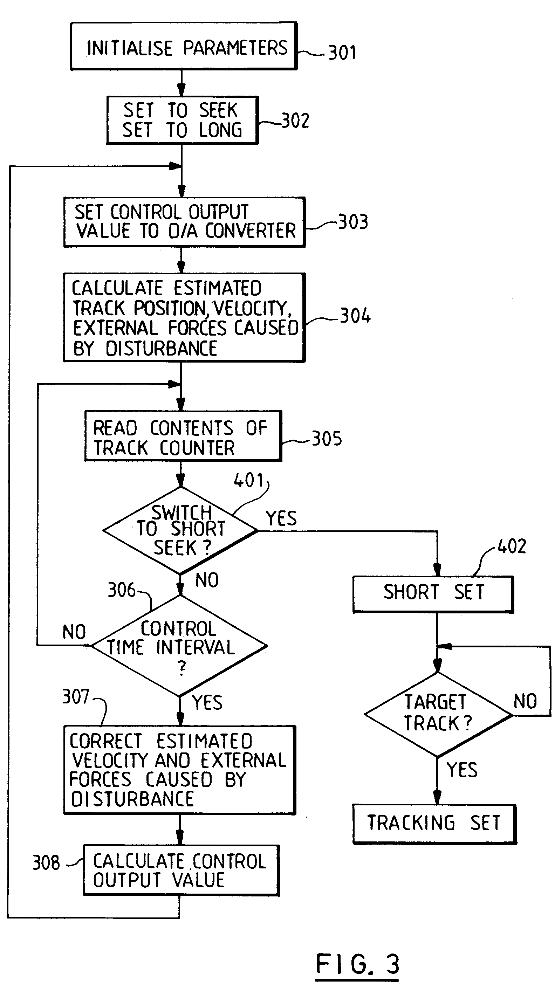

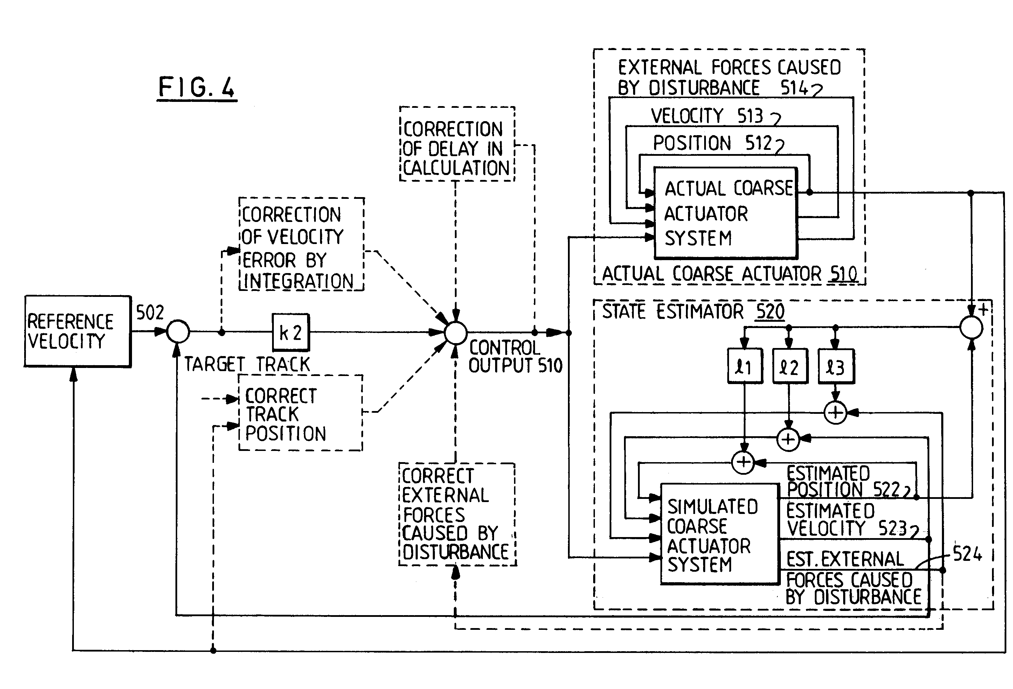

A method of calculating the drive current of the coarse actuator 4 by means of the microprocessor and logic 22 will now be described with reference to FIG.3 and FIG.4. The microprocessor and logic 22 first initializes parameters (Step 301). The initial control output value corresponding to the drive current of the coarse actuator 4, that is, the value to be set to the digital-to-analog converter 204, is a non-zero value in the direction of movement of the optical head 1 towards the target track. The microprocessor and logic 22 sets the seek/track following control line 30 and the long/short seek control line 200 to the seek state and the long seek state, respectively (Step 302) and then outputs the control output value to the digital-to-analog converter 204 (Step 303). The microprocessor and logic 22 has means (hereinafter called state estimator) for storing the theoretical characteristics of the coarse actuator 4. The above track control output value is inputted to the state estimator and the predicted position of a target track at the time of checking track positions, and the velocity of the optical head and external forces caused by disturbances to be applied to the optical head in the seek direction at that time are calculated by the state estimator (Step 304). The microprocessor and logic 22 continues to read the contents of the track counter 21 until certain control time intervals elapse (Steps 305 and 306).

When certain control time intervals have elapsed, the values of the estimated velocity and external forces caused by disturbances are corrected using an error between the actual position obtained from the lastly read contents of the track counter 21 and the estimated track position (Step 307). An estimated velocity value thus obtained is compared with a reference velocity determined according to the number of remaining tracks, and a control output value is calculated so that an error between them becomes smaller (Step 308), and then Step 303 follows.

If the contents of the track counter 21 becomes smaller than the predetermined value, a loop of calculation is terminated and the above short seek state is set (Steps 401 and 402).

The above operations will now be described with reference to FIG.4. In a block 510 corresponding to the actual coarse actuator 4, an actual coarse actuator system 511 generates an actual position 512 and an actual velocity 513, based on a control output 501. The actual coarse actuator system 511 also determines the applied external forces 514 caused by disturbances. The external forces caused by disturbances are defined as all forces except for the force caused by the drive current for driving the coarse actuator, to be applied to the coarse actuator. In the case where the optical disk drive apparatus is installed on a tilt, a gravity component in the driving direction of the actuator is an example of one of the external forces. The microprocessor includes a state estimator 520 and the control output 501 also is inputted to a simulated coarse actuator system 521 thereof. Thus, an estimated position 522, an estimated velocity 523, and an estimated external forces 524 caused by disturbances can be obtained. If the actual coarse actuator system 511 is not different from the simulated coarse actuator system 521 including the external forces caused by disturbance, the estimated velocity 523 can be used for velocity control as if the actual velocity. However, the two systems are actually different from each other, and therefore the estimated velocity 523 can be very different from the real velocity 513. However, since the actual position 512 can be exactly obtained from the track counter, if the estimated velocity 523 and the estimated external forces 524 are corrected and fed back to the state estimator 520 based on the difference between the estimated position 522 and the actual position 512, the estimated velocity 523 can be brought as close to the actual velocity 513 as much as possible. The estimated velocity 523 thus obtained is compared with the reference velocity 502 determined according to the number of remaining tracks, and the control output 501 is calculated so that the difference between them becomes smaller. As described above, since the use of the number of remaining tracks retained in the track counter allows the simulated coarse actuator system 521 to approach the actual coarse actuator system 511 as much as possible, it becomes possible to exactly control the actual coarse actuator. Further, since the external forces caused by disturbance are taken into consideration in the embodiment, more exact control becomes possible.

Thus, as described above, there is the advantage that the microprocessor directly controls the acceleration or deceleration of the optical head during the long seek operation whilst the current track is further than the predetermined number of tracks from the target track. This allows performance of the fast seek to the utmost limit of power of the coarse actuator. The seek operation then switches to velocity control by the fine actuator using the TES after the optical head slows down immediately before the target track is reached, so that high-reliability track following operation can be performed. Another advantage is that since the control of the optical head is performed by using a position signal from the track counter whilst a beam spot moves at high speed, unlike in the prior art a wide bandwidth controlled differentiator and integrator or a velocity detecting circuit are not needed.

In the above mentioned embodiment, the velocity control sections of the coarse servo controller, the fine servo controller and the fine actuator are described as different hardware. However, it will be appreciated that these sections may be controlled by a digital filter implemented by a high-speed arithmetic component such as a digital signal processor or the like or logic circuits, etc. Further, in the above mentioned embodiment, the control of the coarse actuator was switched, immediately before the target track, to track following control based on the output of the lens position sensor. However it will be appreciated also that even after the fine actuator is switched to velocity control based on the TES (therefore PES), the velocity control of the coarse actuator may be continued based on the track counter. In this case, the switcher 201 is controlled by the seek/track following control line 30 rather than the long/short seek control line 200.

Additionally, in the above mentioned embodiment, an actuator configuration with a lens position sensor is employed. However, it will be appreciated that even configuration control in systems in which a condenser is supported by spring-like materials and the neutral point of the condenser is maintained without the lens position sensor, a similar seek operation may be performed, based on filtering the output of the TES sensor or a drive current of the fine actuator, by controlling the coarse actuator.

Furthermore, in the above mentioned embodiment, the long/short seek control line 200 is switched from one state to the other state based on the number of remaining tracks encountered until the target track is reached. However, it will be appreciated that this control may be performed by using a frequency of the TES or the velocity of the optical head 1 instead of the number of tracks. That is, means (not shown) for detecting the frequency of the TES may be provided to switch the state of the long/short seek control line 200 from one to the other, in response to the frequency of the TES becoming less than a predetermined value during the deceleration of the optical head 1, or alternatively means (not shown) for detecting the velocity of movement of the optical head 1 may be provided to switch the state of the long/short seek control line 200 from one to the other, in response to the velocity of movement of the optical head 1 becoming smaller than a predetermined value during the deceleration of the optical head 1. In those cases, in addition to the above detecting means, means for detecting whether the optical head 1 is decelerating, that is, means for determining the plus or minus sign of the acceleration of movement of the optical head 1 are needed.

## Claims

1. An optical disk drive including a coarse tracking actuator for driving an optical head, a fine tracking actuator for driving an objective lens on said optical head, tracking error detecting means for generating a tracking error signal indicating a positional difference between an optical spot irradiated on an optical disk and a target track, switching means adapted to sense whether the number of tracks from the current track to the target track is less than a predetermined value, and if so to switch the fine tracking actuator to being driven in the tracking direction under velocity control based on said tracking error signal.

2. The optical disk drive of claim 1, wherein the switching means includes a track counter for counting the number of tracks from the current track to the target track and means for indicating whether the number of tracks from the current track to the target track is less than a predetermined number of tracks.

3. The optical disk drive of claim 2, wherein if the number of tracks from the current track to the target track is not less than the predetermined number of tracks, said coarse tracking actuator is driven in the tracking direction based on the number of tracks in said track counter.

4. The optical disk drive of claim 3, further including lens position detecting means for generating a relative position error signal indicating the position of said objective lens relative to said optical head, and wherein if the number of tracks from the current track to the target track is not less than the predetermined number of tracks, said fine tracking actuator is also driven in the tracking direction, based on said relative position error signal.

5. The optical disk drive of claim 4, wherein if the number of tracks from the current track to the target track is less than the predetermined number of tracks, said coarse tracking actuator is also driven in the tracking direction, based on said relative position error signal.

6. The optical disk drive according to any of claims 3 to claim 5, having estimation means for estimating a position, a velocity, and external forces for said coarse tracking actuator and means for correcting the velocity and external forces of said coarse tracking actuator estimated by said estimation means, based on the difference between the actual position of said coarse tracking actuator, obtained from the number of tracks in said track counter, and an estimated position of said coarse tracking actuator, obtained from said estimation means, wherein said coarse tracking actuator is driven in the tracking direction, based on an estimated velocity and an estimated external force after correction.

7. The optical disk drive of claim 1, wherein the switching means includes means for outputting a switching signal to the fine tracking actuator when a frequency of said tracking error signal becomes smaller than a predetermined value during deceleration of said optical head.

8. The optical disk drive of claim 1, wherein the switching means includes means for outputting a switching signal to the fine tracking actuator when a velocity of said optical head becomes smaller than a predetermined value during deceleration of said optical head.

9. The optical disk drive of any preceding claim, wherein the velocity of said fine tracking actuator is controlled based on a value obtained from integration of the difference between the current velocity derived from said tracking error signal and a reference velocity.

10. A method for seeking a track on an optical disk in an optical disk drive including a coarse tracking actuator for driving an optical head, a fine tracking actuator for driving an objective lens on said optical head, tracking error detecting means for generating a tracking error signal indicating a positional difference between an optical spot irradiated on the optical disk and the target track, said method comprising the steps of
counting the number of tracks from the current track to the target track;
determining if the number of tracks from the current track to the target track is less than a predetermined number of tracks, and if so, switching the fine tracking actuator to being driven in the tracking direction under velocity control based on said tracking error signal.
